# EUROPÄISCHE PATENTSCHRIFT

(11) **EP 1 759 092 B1**
(45) Veröffentlichungstag und Bekanntmachung des Hinweises auf die Patenterteilung: **30.04.2008**
(21) Anmeldenummer: 05759102.6
(22) Anmeldetag: 20.05.2005
(51) Int. Cl.: F01D 21/04, F02C 9/46

(54) **EINRICHTUNG ZUR DETEKTION EINES WELLENBRUCHS AN EINER GASTURBINE SOWIE GASTURBINE**
DEVICE FOR DETECTING A FRACTURE IN THE SHAFT OF A GAS TURBINE, AND GAS TURBINE
DISPOSITIF DE DETECTION D'UNE RUPTURE D'ARBRE SUR UNE TURBINE A GAZ ET TURBINE A GAZ

(30) Priorität: 29.05.2004 DE 102004026366
(43) Veröffentlichungstag der Anmeldung: 07.03.2007
(73) Patentinhaber: MTU Aero Engines GmbH, 80995 München (DE)
(72) Erfinder: BILSON, Christopher, 14163 Berlin (DE)
(86) Internationale Anmeldenummer: PCT/DE2005/001042
(87) Internationale Veröffentlichungsnummer: WO 2005/116406

(56) Entgegenhaltungen:
- DE-A1- 19 727 296
- GB-A- 903 945
- GB-A- 982 292
- GB-A- 2 002 857
- US-A- 4 473 998
- US-A1- 2003 091 430
- PATENT ABSTRACTS OF JAPAN Bd. 015, Nr. 321 (M-1147), 15. August 1991 (1991-08-15) & JP 03 121219 A (MITSUBISHI HEAVY IND LTD), 23. Mai 1991 (1991-05-23)

## Beschreibung

Die Erfindung betrifft eine Gasturbine mit einer Einrichtung zur Detektion eines Wellenbruchs, gemäß dem Oberbegriff des Patentanspruchs 1.

Als Flugtriebwerke ausgebildete Gasturbinen verfügen über mindestens einen Verdichter, mindestens eine Brennkammer sowie mindestens eine Turbine. Aus dem Stand der Technik sind Flugtriebwerke bekannt, die einerseits drei stromaufwärts der Brennkammer positionierte Verdichter sowie drei stromabwärts der Brennkammer positionierte Turbinen aufweisen. Bei den drei Verdichtern handelt es sich um einen Niederdruckverdichter, einen Mitteldruckverdichter sowie einen Hochdruckverdichter. Bei den drei Turbinen handelt es sich um eine Hochdruckturbine, eine Mitteldruckturbine sowie eine Niederdruckturbine. Nach dem Stand der Technik sind die Rotoren von Hochdruckverdichter und Hochdruckturbine, von Mitteldruckverdichter und Mitteldruckturbine sowie von Niederdruckverdichter und Niederdruckturbine durch jeweils eine Welle miteinander verbunden, wobei die drei Wellen einander konzentrisch umschließen und demnach ineinander verschachtelt sind.

Bricht zum Beispiel die den Mitteldruckverdichter sowie die Mitteldruckturbine miteinander verbindende Welle, so kann der Mitteldruckverdichter der Mitteldruckturbine keine Arbeit mehr entnehmen, wodurch sich dann eine Überdrehzahl an der Mitteldruckturbine einstellen kann. Ein solches Durchdrehen der Mitteldruckturbine muss vermieden werden, da hierdurch das gesamte Flugtriebwerk beschädigt werden kann. Aus Sicherheitsgründen muss demnach ein Wellenbruch an einer Gasturbine sicher detektierbar sein, um bei Auftreten eines Wellenbruchs eine Brennstoffzufuhr zur Brennkammer zu unterbrechen. Eine derartige Detektion eines Wellenbruchs bereitet insbesondere dann Schwierigkeiten, wenn die Gasturbine, wie oben beschrieben, drei sich konzentrisch umschließende und damit ineinander verschachtelte Wellen aufweist. In diesem Fall bereitet vor allem die Detektion eines Wellenbruchs der mittleren Welle, welche die Mitteldruckturbine mit dem Mitteldruckverdichter koppelt, Schwierigkeiten.

Das Dokument PATENT ABSTRACTS OF JAPAN Bd. 015, Nr. 321 (M-1147) & JP 03121219 A betrifft eine Einrichtung zur Detektion eines Wellenbruchs an einer Gasturbine, bei der eine mit einem inkompressiblen Fluid gefüllte Leitung bis in den Bereich des Endes einer Turbinenwelle reicht. Bei Wel lenbruch wird die Leitung bzw. das Rohr (tube) endseitig zerstört, so dass das Fluid austreten kann und ein Federspeicher zum Schließen eines Treibstoffventils aktiviert wird. Bei den Betriebsbedingungen im Turbineninneren ist nicht auszuschließen, dass die Leitung auch ohne Wellenbruch undicht wird, und die Gasturbine ungewollt abgeschaltet wird. Dies kann bei Flugtriebwerken für das Flugzeug katastrophale Folgen haben.

Hiervon ausgehend liegt der vorliegenden Erfindung das Problem zu Grunde, eine Gasturbine mit einer neuartigen Einrichtung zur Detektion eines Wellenbruchs vorzuschlagen, die es ermöglicht, einen Wellenbruch im Inneren einer mehrwelligen, schwer zugänglichen Turbinenbaugruppe sicher zu detektieren.

Dieses Problem wird durch eine Gasturbine mit einer Einrichtung zur Detektion eines Wellenbruchs gemäß Patentanspruch 1 gelöst. Die Einrichtung dient der Detektion eines Wellenbruchs an einem Rotor einer ersten Turbine, insbesondere einer Mitteldruckturbine, wobei stromabwärts der ersten Turbine eine zweite Turbine, insbesondere eine Niederdruckturbine, positioniert ist. Die Einrichtung verfügt über ein zwischen dem Rotor der ersten Turbine und einem Stator der zweiten Turbine, benachbart zu einer stromabwärtigen Rotorscheibe der ersten Turbine radial innenliegend positioniertes, im Stator der zweiten Turbine axial verschiebbares Betätigungselement, und über ein in dem Stator der zweiten Turbine radial geführtes Übertragungselement, um einen vom radial innenliegend positionierten Betätigungselement detektierten Wellenbruch an ein Schaltelement zu übertragen, welches gegenüber dem Strömungskanal radial außenliegend an einem Gehäuse der Gasturbine positioniert ist. Im Sinne der hier vorliegenden Erfindung wird eine Gasturbine mit einer Einrichtung zur Detektion eines Wellenbruchs vorgeschlagen, die ein radial innenliegend positioniertes, mechanisches Betätigungselement zur mechanischen Detektion eines Wellenbruchs sowie ein mechanisches Übertragungselement zur mechanischen Übertragung des vom Betätigungselement detektierten Wellenbruchs an ein radial außenliegendes Schaltelement aufweist, wobei zwischen dem Betätigungselement und dem Übertragungselement und/oder zwischen dem Ü-bertragungselement und dem Schaltelement ein elastisch verformbares Federelement angeordnet ist. Das Schaltelement ist radial außen an einem Gehäuse der Gasturbine befestigt. Die Baugruppen der Einrichtung zur Detektion eines Wellenbruchs an einer Gasturbine, die radial innenliegend positioniert und daher schwer zugänglich sind, sind als rein mechanische Komponenten ausgeführt und verfugen daher über eine hohe zuverlässigkeit.

Das Schaltelement, welches mit der Steuerelektronik des Flugtriebwerks in Verbindung steht und als elektrisches bzw. elektronisches Schaltelement ausgeführt ist, ist leicht zugänglich radial außen am Gehäuse der Gasturbine befestigt. Das Schaltelement ist demnach für Wartungsarbeiten leicht zugänglich.

Bevorzugte Weiterbildungen der Erfindung ergeben sich aus dem Unteranspruch und der nachfolgenden Beschreibung. Ein Ausführungsbeispiel der Erfindung wird, ohne hierauf beschränkt zu sein, an Hand der Zeichnung näher erläutert. Dabei zeigt:

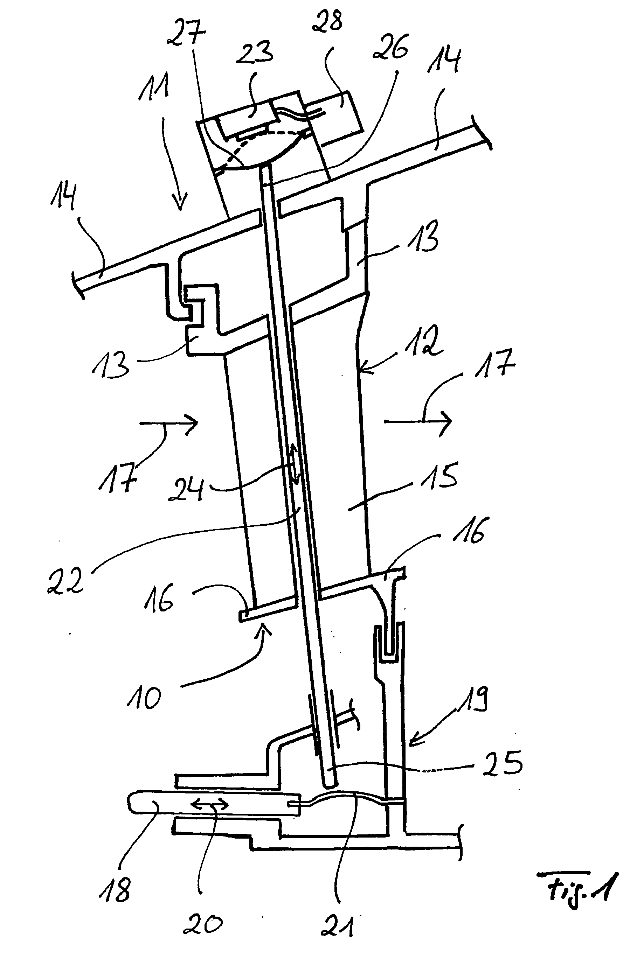

- Fig. 1: einen Ausschnitt aus einer erfindungsgemäßen Gasturbine mit einer erfindungsgemäßen Einrichtung zur Detektion eines Wellenbruchs an einer Gasturbine.

Nachfolgend wird die hier vorliegende Erfindung unter Bezugnahme auf Fig. 1 in größerem Detail beschrieben.

Fig. 1 zeigt einen ausschnittsweisen Querschnitt durch eine erfindungsgemäße Gasturbine, nämlich ein Flugtriebwerk, im Bereich eines statorseitigen Leitschaufelkranzes 10 einer Niederdruckturbine 11. Der in Fig. 1 dargestellte Leitschaufelkranz 10 der Niederdruckturbine 11 wird von mehreren, in Umfangsrichtung voneinander beabstandeten, feststehenden Leitschaufeln 12 gebildet, wobei die Leitschaufeln 12 mit einem radial außenliegenden Abschnitt 13 an einem statorseitigen Gehäuse 14 der Gasturbine befestigt sind. Schaufelblätter 15 der Leitschaufeln 12 des Leitschaufelkranzes 10 erstrecken sich in radialer Richtung zwischen dem radial außenliegenden Abschnitt 13 und einem radial innenliegenden Abschnitt 16 der Leitschaufeln 12 im Bereich eines Strömungskanals der Niederdruckturbine 11.

Die Strömungsrichtung durch den Strömungskanal ist in Fig. 1 durch Pfeile 17 visualisiert. Bei dem in Fig. 1 dargestellten Leitschaufelkranz 10 der Niederdruckturbine 11 handelt es sich um den in Strömungsrichtung (Pfeil 17) gesehen ersten Leitschaufelkranz der Niederdruckturbine 11. Stromabwärts dieses Leitschaufelkranzes 10 ist ein nicht-dargestellter Laufschaufelkranz der Niederdruckturbine 11 positioniert. Stromaufwärts der Niederdruckturbine 11 ist eine nicht-dargestellte Mitteldruckturbine angeordnet. Dabei grenzt an den in Fig. 1 dargestellten, in Strömungsrichtung gesehen ersten Leitschaufelkranz 10 der Niederdruckturbine 11 ein in Strömungsrichtung gesehen letzter, nicht-dargestellter Laufschaufelkranz der Mitteldruckturbine an. Stromaufwärts der Mitteldruckturbine ist vorzugsweise eine Hochdruckturbine positioniert.

Wie bereits erwähnt, sind bei derartigen Gasturbinen, die drei Turbinen sowie drei Verdichter aufweisen, die Rotoren von Hochdruckturbine sowie Hochdruckverdichter, Mitteldruckturbine sowie Mitteldruckverdichter sowie Niederdruckturbine und Niederdruckverdichter durch jeweils eine Welle miteinander verbunden, wobei diese drei Wellen sich einander konzentrisch umschließen und damit ineinander verschachtelt sind.

Es liegt nun im Sinne der hier vorliegenden Erfindung, eine Einrichtung zur Detektion eines Wellenbruchs an einer Gasturbine bereitzustellen, die sich insbesondere zur Detektion eines Wellenbruchs der den Mitteldruckturbinenrotor mit dem Mitteldruckverdichterrotor verbindenden Welle eignet. Bricht nämlich diese Welle, so kann der Mitteldruckverdichter der Mitteldruckturbine keine Arbeit bzw. Leistung mehr entnehmen, was zu einem Überdrehen der Mitteldruckturbine führen kann. Da ein derartiges Überdrehen der Turbine zu schweren Beschädigungen des Flugtriebwerks führen kann, muss ein Wellenbruch sicher detektiert werden.

Im Sinne der hier vorliegenden Erfindung wird vorgeschlagen, zwischen den Rotor der nicht-dargestellten Mitteldruckturbine und den Stator der Niederdruckturbine 11 ein Betätigungselement 18 zu positionieren, wobei das Betätigungselement 18 im gezeigten Ausführungsbeispiel zwischen dem in Strömungsrichtung gesehen letzten Laufschaufelkranz der Mitteldruckturbine und dem in Strömungsrichtung gesehen ersten Leitschaufelkranz 10 der Niederdruckturbine 11 positioniert ist. Das Betätigungselement 18 ist dabei gegenüber dem Strömungskanal radial innenliegend innerhalb der Gasturbine benachbart zu einer nicht-dargestellten Rotorscheibe des in Strömungsrichtung gesehen letzten Laufschaufelkranzes der nicht-dargestellten Mitteldruckturbine positioniert. Das Betätigungselement 18 ist in einer radial innenliegenden Dichtungsstruktur 19 des Stators der Niederdruckturbine 11 in Strömungsrichtung bzw. in axialer Richtung verschiebbar geführt. Die axiale Verschiebbarkeit des Betätigungselements 18 ist in Fig. 1 durch einen Doppelpfeil 20 verdeutlicht. Wie Fig. 1 entnommen werden kann, greift an einem Ende des Betätigungselements 18 ein elastisch verformbares Federelement 21 an, dessen Wölbung unmittelbar von der axialen Position des Betätigungselements 18 abhängt.

Bei einem Wellenbruch der Welle, welche die stromaufwärts der Niederdruckturbine positionierte Mitteldruckturbine mit dem Mitteldruckverdichter verbindet, wird der Rotor der Mitteldruckturbine aufgrund der Druckdifferenzen innerhalb der Mitteldruckturbine in Richtung auf den Stator der Niederdruckturbine 11 und damit nach hinten bzw. in Durchströmungsrichtung (Pfeil 17) bewegt, sodass der Rotor der Mitteldruckturbine das Betätigungselement 18 berührt und in axialer Richtung in Richtung der Pfeile 17 bewegt. Im gezeigten Ausführungsbeispiel betätigt die Rotorscheibe des in Strömungsrichtung gesehen letzten Laufschaufelkranzes der Mitteldruckturbine das dem in Strömungsrichtung gesehen ersten Leitschaufelkranz 10 der Niederdruckturbine 11 zugeordnete Betätigungselement 18.

Das Betätigungselement 18 wirkt mit einem Übertragungselement 22 zusammen, um einen vom Betätigungselement 18 detektierten Wellenbruch an ein Schaltelement 23 zu übertragen, welches radial außen am Gehäuse 14 der Gasturbine befestigt ist. Wie Fig. 1 entnommen werden kann, ist das Übertragungselement 22 im Stator der Niederdruckturbine 11, nämlich im statorseitigen Leitschaufelkranz 10 der Niederdruckturbine 11, in radialer Richtung verschiebbar geführt. Die radiale Verschiebbarkeit des Übertragungselements 22 ist in Fig. 1 durch einen Doppelpfeil 24 visualisiert.

Das Übertragungselement 22 erstreckt sich in radialer Richtung durch die in Fig. 1 dargestellte Leitschaufel 12 des Leitschaufelkranzes 10, wobei das Übertragungselement an einem radial innenliegenden Ende 25 mit dem Betätigungselement 18 und einem radial außenliegenden Ende 26 mit dem Schaltelement 23 zusammenwirkt. Wird bei einem Wellenbruch im Bereich des Mitteldrucksystems der Gasturbine der Rotor der Mitteldruckturbine in Richtung der Pfeile 17 bewegt und hierdurch das Betätigungselement 18 ebenfalls in Richtung der Pfeile 17 axial verschoben, so tritt eine stärkere Durchwölbung des Federelements 21 ein, wodurch das Übertragungselement 22 in radialer Richtung nach außen verschoben wird. Im gezeigten Ausführungsbeispiel wirkt das radial außenliegende Ende 26 des Übertragungselements 22 mit einem Federelement 27 zusammen, welches bei einem durch einen Wellenbruch verursachten, nach radial außen Verschieben des Übertragungselements 22 von der in Fig. 1 mit durchgezogenen Linien gezeigten Position in die in Fig. 1 mit gestrichelten Linien gezeigte Position verformt wird und letztendlich das Schaltelement 23 betätigt. Das Schaltelement 23 steht mit einem Modul 28 einer Steuereinrichtung der Gasturbine in Verbindung, welche bei einem detektierten Wellenbruch eine Brennstoffzufuhr zur Brennkammer der Gasturbine unterbricht.

Im Sinne der hier vorliegenden Erfindung wird demnach eine Einrichtung zur Detektion eines Wellenbruchs an einer Gasturbine vorgeschlagen, bei welcher mit einem radial innenliegenden Betätigungselement 18 auf mechanische Art und Weise ein Wellenbruch detektiert wird, und wobei mit einem Übertragungselement 22 der vom Betätigungselement 18 detektierte Wellenbruch auf mechanische Weise an ein radial außen am Gehäuse 14 der Gasturbine positioniertes Schaltelement 23 übertragen wird. Radial innenliegende bzw. schwer zugängliche Baugruppen der erfindungsgemäßen Einrichtung zur Detektion eines Wellenbruchs beruhen auf einem rein mechanischen Wirkprinzip und sind daher sehr robust. Elektrische bzw. elektronische Baugruppen der erfindungsgemäßen Einrichtung, wie zum Beispiel das Schaltelement 23 bzw. das Modul 28, sind ausschließlich außen am Gehäuse 14 der Gasturbine befestigt und damit für Wartungsarbeiten leicht zugänglich.

Im Ausführungsbeispiel der Fig. 1 wirkt das Übertragungselement 22 am radial innenliegenden Ende 25 über ein Federelement 21 mit dem Betätigungselement 18 und dam radial außenliegenden Ende 26 über das Federelement 27 mit dem Schaltelement 23 zusammen. An dieser Stelle sei darauf hingewiesen, dass sowohl am radial innenliegenden Ende 25 als auch am radial außenliegenden Ende 26 das Übertragungselement 22 unmittelbar mit dem Betätigungselement 18 bzw. dem Schaltelement 23 zusammenwirken kann. So kann zum Beispiel das Betätigungselement 18 an einem Abschnitt, an welchem dasselbe mit dem Übertragungselement 22 zusammenwirkt, über einen kegelförmigen Abschnitt verfügen, um bei einer axialen Verschiebung des Betätigungselements 18 in Richtung des Doppelpfeils 20 eine radiale Verschiebung des Übertragungselements 22 in Richtung des Doppelpfeils 24 zu gewährleisten.

Das Federelement 24 ist vorzugsweise als umschnappende Tellerfeder ausgeführt. Hierdurch wird im Falle eines Wellenbruchs das nach radial außen Verschieben des Übertragungselements 22 betont und in ein dauerhaftes Umschnappen der Tellerfeder umgesetzt. Die erhöht die Sicherheit bei der Betätigung des Schaltelements 23.

## Patentansprüche

1. Gasturbine, insbesondere Flugtriebwerk, mit mindestens zwei Verdichtern, mindestens einer Brennkammer, und mindestens zwei Turbinen, und mit einer Einrichtung zur Detektion eines Wellenbruchs an einem Rotor einer ersten Turbine, insbesondere einer Mitteldruckturbine, wobei stromabwärts der ersten Turbine eine zweite Turbine (11), insbesondere eine Niederdruckturbine, positioniert ist,
**dadurch gekennzeichnet,**
**dass** zwischen dem Rotor der ersten Turbine und einem Stator der zweiten Turbine (11) ein Betätigungselement (18) radial innenliegend benachbart zu einer Rotorscheibe des in Strömungsrichtung gesehen letzten Laufschaufelkranzes der ersten Turbine positioniert und in einer radial innenliegenden Dichtungsstruktur (19) des Stators der zweiten Turbine (11) in axialer Richtung bzw. in Strömungsrichtung verschiebbar geführt ist, dass ein Übertragungselement (22) im Stator der zweiten Turbine (11) in radialer Richtung verschiebbar geführt ist, dass das Übertragungselement (22) an einem radial innenliegenden Ende (25) mit dem Betätigungselement (18) und an einem radial außenliegenden Ende (26) mit einem radial außenliegend an einem Gehäuse (14) der Gasturbine positionierten Schaltelement (23) zur Übertragung eines vom Betätigungselement (18) detektierten Wellenbruchs an das Schaltelement (23) zusammenwirkt, und dass zwischen dem Betätigungselement (18) und dem Übertragungselement (22) und/oder zwischen dem Übertragungselement (22) und dem Schaltelement (23) ein elastisch verformbares Federelement (21, 27) angeordnet ist.

2. Gasturbine nach Anspruch 1,
**dadurch gekennzeichnet,**
**dass** das Übertragungselement (22) in einem in Strömungsrichtung gesehen ersten Leitschaufelkranz (10) der zweiten Turbine (11) geführt ist.

## Claims

1. A gas turbine, in particular an aircraft engine, with at least two compressors, at least one combustion chamber, and at least two turbines, and with a device for detecting a shaft fracture in a rotor of a first turbine, in particular a medium-pressure turbine, wherein a second turbine (11), in particular a low-pressure turbine, is positioned downstream of the first turbine,
**characterised in that** an actuating element (18) located radially inwardly adjacent to a rotor disc of the last rotor blade ring, viewed in the flow direction, of the first turbine is positioned between the rotor of the first turbine and a stator of the second turbine (11) and is displaceably guided in the axial direction and in the flow direction in a radially inwardly located sealing structure (19) of the stator of the second turbine, that a transmission element (22) is displaceably guided in the radial direction in the stator of the second turbine, that the transmission element (22) co-operates on a radially inwardly located end (25) with the actuating element (18) and co-operates on a radially outwardly located end (26) with a radially outwardly located switching element (23) positioned on a housing (14) of the gas turbine in order to transmit a shaft fracture detected by the actuating element (18) to the switching element (23), and that an elastically deformable spring element (21, 27) is arranged between the actuating element (18) and the transmission element (22) and/or between the transmission element (22) and the switching element (23).

2. A gas turbine according to claim 1, **characterised in that** the transmission element (22) is guided in a first vane ring (10), viewed in the flow direction, of the second turbine (11).

## Revendications

1. Turbine à gaz, en particulier turboréacteur, comportant au moins deux compresseurs, au moins une chambre de combustion et au moins deux turbines, et comportant un dispositif de détection d'une rupture d'arbre au niveau d'un rotor d'une première turbine, en particulier d'une turbine moyenne pression, une deuxième turbine (11), en particulier une turbine basse pression, étant positionnée en aval de la première turbine, **caractérisée en ce qu'**un élément d'actionnement (18) est positionné entre le rotor de la première turbine et un stator de la deuxième turbine (11) radialement à l'intérieur et de manière adjacente à un disque de rotor de la dernière couronne d'aubes mobiles, vue dans le sens d'écoulement, de la première turbine et guidé de manière coulissante en direction axiale et/ou dans le sens d'écoulement dans une structure d'étanchéification (19), située radialement à l'intérieur, du stator de la deuxième turbine (11), **en ce qu'**un élément de transmission (22) est guidé de manière coulissante en direction radiale dans le stator de la deuxième turbine (11), **en ce que** l'élément de transmission (22) interagit au niveau d'une extrémité (25) située radialement à l'intérieur avec l'élément d'actionnement (18) et au niveau d'une extrémité (26) située radialement à l'extérieur avec un élément de commutation (23) positionné radialement à l'extérieur au niveau d'un carter (14) de la turbine à gaz pour transmettre une rupture d'arbre détectée par l'élément d'actionnement (18) au niveau de l'élément de commutation (23) et **en ce qu'**un élément formant ressort (21, 27) à déformation élastique est disposé entre l'élément d'actionnement (18) et l'élément de transmission (22) et/ou entre l'élément de transmission (22) et l'élément de commutation (23).

2. Turbine à gaz selon la revendication 1, **caractérisée en ce que** l'élément de transmission (22) est guidé dans une première couronne d'aubes fixes (10), vue dans le sens d'écoulement, de la deuxième turbine (11).
